# EUROPEAN PATENT APPLICATION

(11) **EP 4 617 532 A1**
(43) Date of publication of application: **17.09.2025**
(21) Application number: 23902717.0
(22) Date of filing: 12.12.2023
(51) Int. Cl.: F16K 1/02, F16K 1/32, F16K 1/38

(54) **ELECTRONIC EXPANSION VALVE**

(30) Priority: 12.12.2022 CN 202211591592; 21.03.2023 CN 202310307328; 21.03.2023 CN 202320590688 U; 21.03.2023 CN 202320575377 U
(71) Applicant: Zhejiang Dunan Artificial Environment Co., Ltd., Shaoxing Zhejiang 311835 (CN)
(72) Inventor: YANG, Zhongyu, Shaoxing, Zhejiang 311835 (CN); JIN, Ju, Shaoxing, Zhejiang 311835 (CN); WANG, Fugang, Shaoxing, Zhejiang 311835 (CN)
(74) Representative: Berggren Oy
(86) International application number: PCT/CN2023/138231
(87) International publication number: WO 2024/125521

(57) **Abstract**

Provided is an electronic expansion valve, including a valve seat portion; and a valve needle component disposed in a valve chamber of the valve seat portion, wherein the valve needle component includes a large valve needle portion and a small valve needle; the large valve needle portion includes a valve needle body, a small valve port is formed inside the valve needle body, and the small valve needle is configured to close the small valve port; the valve needle body has a guide hole, a first inner sealing ring is provided between the small valve needle and an inner wall of the guide hole, and the small valve needle is movably in sealing engagement with the inner wall of the guide hole via the first inner sealing ring; a sealing portion is formed at a position where the small valve needle is in close contact with the small valve port; a part of the valve chamber in which an end of the small valve needle away from the sealing portion is located is in communication with the small valve port; and a maximum diameter of the sealing portion is smaller than an outer diameter of the first inner sealing ring, or the maximum diameter of the sealing portion is smaller than an inner diameter of the first inner sealing ring. The embodiment ensures that the small valve needle is constantly subjected to a pressure differential generated between an inlet fluid and an outlet fluid in a static or moving state, thereby eliminating the problem of positional errors of the valve needle relative to the valve port when a screw rod rotates to a same position relative to a nut sleeve.

## Description

The present invention claims priority to Chinese Patent Application No. 202211591592.X, filed on December 12, 2022, with the China National Intellectual Property Administration, and titled "Electronic Expansion Valve"; Chinese Patent Application No. 202310307328.7, filed on March 21, 2023, with the China National Intellectual Property Administration, and titled "Electronic Expansion Valve"; Chinese Patent Application No. 202320590688.8, filed on March 21, 2023, with the China National Intellectual Property Administration, and titled "Electronic Expansion Valve"; and Chinese Patent Application No. 202320575377.4, filed on March 21, 2023, with the China National Intellectual Property Administration, and titled "Electronic Expansion Valve".

### Technical Field

The present invention relates to the technical field of electronic expansion valves, and in particular, to an electronic expansion valve.

### Background

At present, electronic expansion valves are commonly used in various refrigeration and heating devices, such as air conditioners, refrigerators and heat pump water heaters, to regulate the flow rate of fluid. An electronic expansion valve generally includes a valve seat component, a valve needle component, and other structures. An opening degree of a valve port is adjusted by movement of the valve needle component to control the flow rate.

Chinese Patent Publication No. CN216742910U discloses an electronic expansion valve, which includes: a valve seat component; a valve sleeve connected to the valve seat component; a valve needle component disposed within the valve seat component, wherein the valve needle component includes a main body portion and a small valve needle, the main body portion having a small valve port, and the small valve needle being movably arranged to adjust an opening degree of the small valve port; a drive component disposed in a chamber defined by the valve seat component and the valve sleeve, a rotor chamber is formed in an area between structures of the drive component located inside the valve sleeve and an inner wall of the valve sleeve, and the drive component is in driving connection with the small valve needle; and a balancing passage that communicates the rotor chamber with the small valve port. Since the electronic expansion valve is of an internally balanced structure, the small valve needle is subjected to substantially zero fluid force during the process of closing the small valve port or moving up and down. During upward and downward movements of the small valve needle, the small valve needle is also subjected to a frictional force exerted by a first sealing ring. The direction of the frictional force changes with a movement direction of the small valve needle, and the frictional force acting on the small valve needle is transmitted to a screw rod. When the screw rod moves upward relative to a nut assembly, an upper side surface of a thread of a nut sleeve comes into contact with an upper side surface of a thread of the screw rod. When the screw rod moves downward relative to the nut sleeve, a lower side surface of the thread of the nut sleeve comes into contact with a lower side surface of the thread of the screw rod. As a result, during the upward and downward movements of the screw rod, when the screw rod rotates to a same position relative to the nut sleeve, a position of the screw rod relative to the nut sleeve has errors due to thread clearance, thereby causing positional errors between the valve needle and the valve port. Consequently, a flow control accuracy of the electronic expansion valve is reduced. The frictional force acting on the small valve needle during the upward and downward movement cannot resolve the positional errors of the valve needle relative to the valve port. Moreover, the change in the direction of the frictional force further increases the instability during the movements of the screw rod. Therefore, a fully balanced small valve needle is not conducive to resolving a problem that occurs during the upward and downward movements of the screw rod, when the screw rod rotates to the same position relative to the nut sleeve of the electronic expansion valve, there are positional errors of the valve needle relative to the valve port.

### Summary

The present invention provides an electronic expansion valve to solve the problem in the prior art where, during the downward and upward movements of the screw rod, when the screw rod rotates to the same position relative to the nut sleeve, there are positional errors of the valve needle relative to the valve port.

To solve the above problem, some embodiments of the present invention provide an electronic expansion valve, which includes: a valve seat portion; and a valve needle component disposed in a chamber of the valve seat portion, where the valve needle component includes a large valve needle portion and a small valve needle; the large valve needle portion includes a valve needle body, a small valve port is provided inside the valve needle body, and the small valve needle is configured to close the small valve port; the valve needle body has a guide hole, a first inner sealing ring is provided between the small valve needle and an inner wall of the guide hole, and the small valve needle is in movable sealing engagement with the inner wall of the guide hole via the first inner sealing ring; a sealing portion is formed at a position where the small valve needle abuts against the small valve port; a part of the valve chamber, in which an end of the small valve needle away from the sealing portion is located, is in communication with the small valve port; the first inner sealing ring is located in a first inner sealing groove on an outer wall of the small valve needle, and a maximum diameter of the sealing portion is smaller than an outer diameter of the first inner sealing ring; or, the first inner sealing ring is located in a first inner sealing groove on an inner wall of the guide hole, and the maximum diameter of the sealing portion is smaller than an inner diameter of the first inner sealing ring.

Further, when the first inner sealing ring is located in the first inner sealing groove on the inner wall of the guide hole, a friction force F1 is generated between the first inner sealing ring and the outer wall of the small valve needle, and the small valve needle is subjected to a resultant force F2 of fluid within the valve seat portion, where F1 < F2; when the first inner sealing ring is located in the first inner sealing groove on the outer wall of the small valve needle, a friction force F1 is generated between the first inner sealing ring and the inner wall of the guide hole, and the small valve needle is subjected to a resultant force F2 of fluid within the valve seat portion, where F1 < F2.

Further, the electronic expansion valve includes a screw rod assembly, the screw rod assembly includes a small elastic member, and an end of the small elastic member abuts against the small valve needle; when the small valve port is closed, the small elastic member applies a force toward the small valve port to the small valve needle, serving as a sealing preload force. A minimum value of the sealing preload force is F3, where F1 + F2 < F3.

Further, the small valve needle has a sealing section, the sealing section is axially movable through the guide hole, the sealing section has the first inner sealing groove, the first inner sealing ring is mounted in the first inner sealing groove, and an outer wall of the first inner sealing ring abuts against the inner wall of the guide hole.

Further, the small valve needle has a tapered section, and the sealing portion is formed at a position where the tapered section is in close contact with the small valve port.

Further, the large valve needle portion includes a small sealing gasket disposed inside the valve needle body, the small valve port includes a through hole in the small sealing gasket, an inner wall of the through hole is in sealing engagement with a tapered section of the small valve needle, and an end of the through hole facing the first inner sealing ring has a chamfered surface.

Further, the small valve needle has a limiting section, the limiting section is located on a side of the guide hole away from the small valve port and is connected to the sealing section, and a part of the valve chamber in which the limiting section is located is in communication with the small valve port.

Further, the valve seat portion has a large valve port, and the valve needle body is configured to close the large valve port; the valve needle body is provided with a balance passage, and a part of the valve chamber in which an end of the valve needle body away from the large valve port is located is in communication with the large valve port via the balance passage; the part of the valve chamber in which the end of the small valve needle away from the sealing portion is located is in communication with the small valve port via the balance passage; and the large valve port is in communication with the small valve port.

Further, the large valve needle portion includes a limiting ring, the limiting ring is fixed within the valve needle body, the small valve needle is inserted into the valve needle body, and the limiting ring is in a stop fit with the small valve needle to prevent the small valve needle from separating from the large valve needle portion.

Further, the valve needle body has a limiting hole, an inner diameter of the guide hole is smaller than an inner diameter of the limiting hole, the limiting ring is fixed within the limiting hole, and the end of the small valve needle away from the sealing portion is located within the limiting hole.

Compared with the prior art, some embodiments of the present invention have the beneficial effects:
(1) The small valve needle is constantly subjected to a pressure difference generated between an inlet fluid and an outlet fluid during a static or moving state, such that the small valve needle no longer remains balanced. The pressure difference is eventually transmitted to the screw rod of the electronic expansion valve, thereby facilitating the resolution of the problem in which, during upward or downward movement of the screw rod, positional errors of the valve needle relative to the valve port occur when the screw rod is rotated to the same position with respect to the nut sleeve of the electronic expansion valve;
(2) The small valve needle is subjected to a friction force F1 and a resultant force F2 of fluid acting within the valve seat portion, where F1 < F2. Under a same fluid flow conditions, it can be ensured that a resultant force of F1 and F2 on the small valve needle always acts in a same direction regardless of whether the small valve needle moves upward or downward;
(3) A minimum value of the sealing preload force exerted by the small valve needle toward the small valve port is F3, and F1 + F2 < F3, thereby ensuring that when the small valve needle closes the small valve port, the resultant force of F1 and F2 is insufficient to push the small valve needle open;
(4) The tapered section of the small valve needle is in sealing engagement with the small valve port. The tapered section serves to adjust flow rate, and the small valve port supports the tapered section. When the small valve needle seals the small valve port, the position of the small valve needle remains stable, ensuring that in a low-pulse, low-flow-rate adjustment state of the small valve needle of the electronic expansion valve, any inflection point on a flow rate curve has high precision and falls within a narrow pulse range, thereby enhancing the flow adjustment precision of the small valve needle; and
(5) An end of the through hole facing the first inner sealing ring has a chamfered surface, which facilitates a insertion of the small valve needle into the small valve port and also enhances a sealing performance between the small valve needle and the through hole, reducing wear of the small valve port caused by the small valve needle during the sealing process.

### Brief Description of the Drawings

The accompanying drawings, which constitute a part of the present invention, are used for providing a further understanding of the present invention; and illustrative embodiments of the present invention and descriptions thereof are intended to explain the present invention and are not construed to unduly limit the present invention. In the drawings:
Fig. 1 shows a structural schematic view of an electronic expansion valve according to an embodiment of the present invention;
Fig. 2 shows a partially enlarged view of the electronic expansion valve in Fig. 1;
Fig. 3 shows another structural schematic view of a large sealing gasket in the electronic expansion valve according to an embodiment of the present invention;
Fig. 4 shows a schematic view of some structures of the electronic expansion valve in Fig. 1;
Fig. 5 shows a sectional view of a valve needle body in the electronic expansion valve in Fig. 1;
Fig. 6 shows a schematic view of a flow rate curve of the electronic expansion valve in Fig. 1; and
Fig. 7 shows a schematic view of the engagement of a screw rod and a nut body in the electronic expansion valve according to an embodiment of the present invention.

The following reference signs are involved in the accompanying drawings:
100, valve seat portion; 101, large valve port; 102, flow-through hole; 103, third passage; 104, valve seat ring; 105, sealing portion; 110, large sealing gasket; 111, sealing surface; 112, second annular step; 113, third annular step; 114, second chamfer; 115, third chamfer; 120, large valve seat; 121, compression ring; 1211, first chamfer; 130, small valve seat; 131, first annular step; 140, reinforced sealing ring; 151, first outer sealing ring; 152, second outer sealing ring;
200, valve needle component; 210, large valve needle portion; 211, small valve port; 212, side port; 213, guide hole; 214, first passage; 215, flow chamber; 220, small valve needle; 221, limiting section; 222, sealing section; 223, annular stopper; 224, tapered section; 231, first inner sealing ring; 232, second inner sealing ring; 240, valve needle body; 241, limiting hole; 242, assembly recess; 243, avoidance groove; 250, limiting ring; 260, small sealing gasket; 261, chamfered section; 270, limiting sleeve; 280, large elastic member;
300, screw rod assembly; 310, screw rod; 320, assembly sleeve; 330, bearing; 340, bushing; 350, small elastic member;
400, valve tube;
500, nut assembly; 501, fourth passage; 510, nut body; 520, connecting plate.

### Detailed Description of the Embodiments

The technical solution in the embodiments of the present invention will be clearly and completely described below with reference to the accompanying drawings in the embodiments of the present invention. It is clear that the embodiments described are part of the embodiments of the present invention, but not all of them. The following description of at least one exemplary embodiment is merely illustrative and shall in no way be construed as limiting the present invention or applications and uses thereof. Based on the embodiments of the present invention, all other embodiments obtained by those of ordinary skill in the art without creative efforts shall fall within the scope of protection of the present invention.

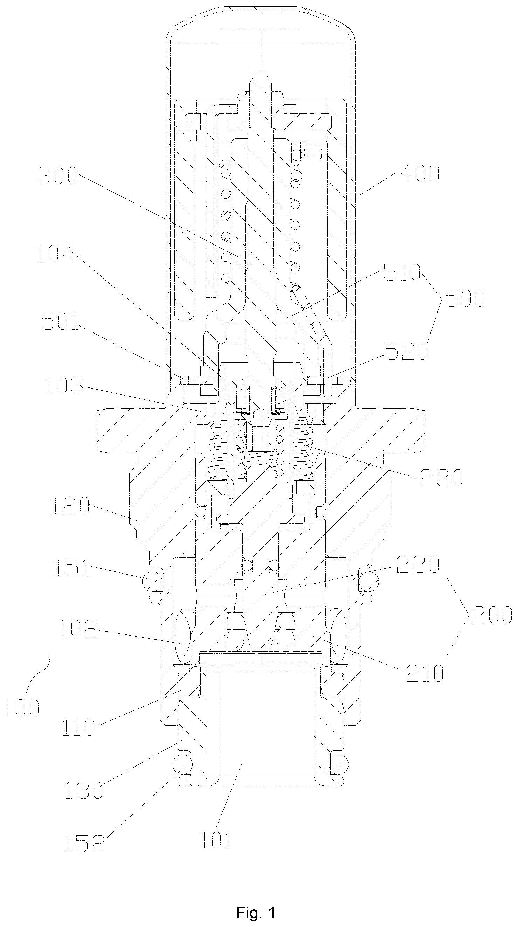

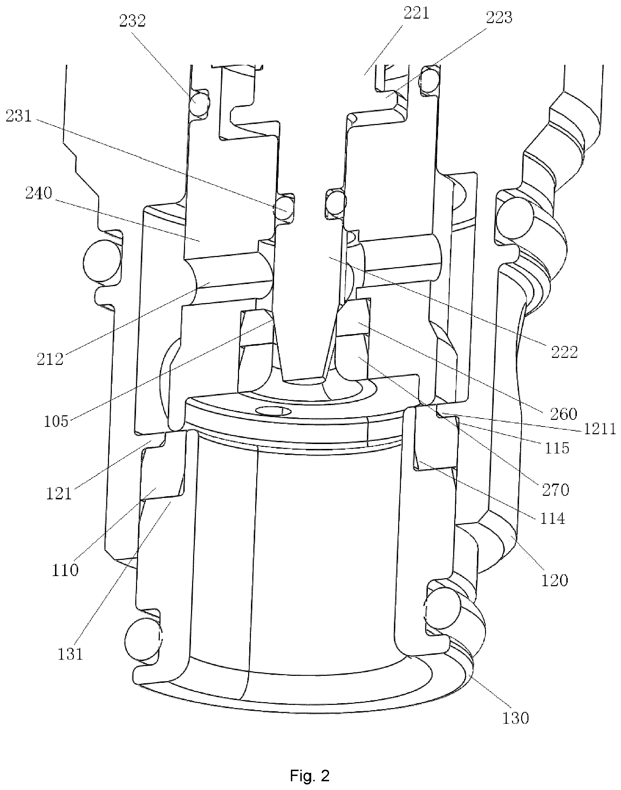

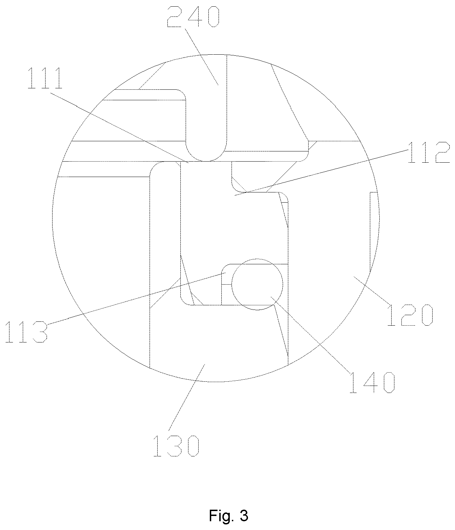

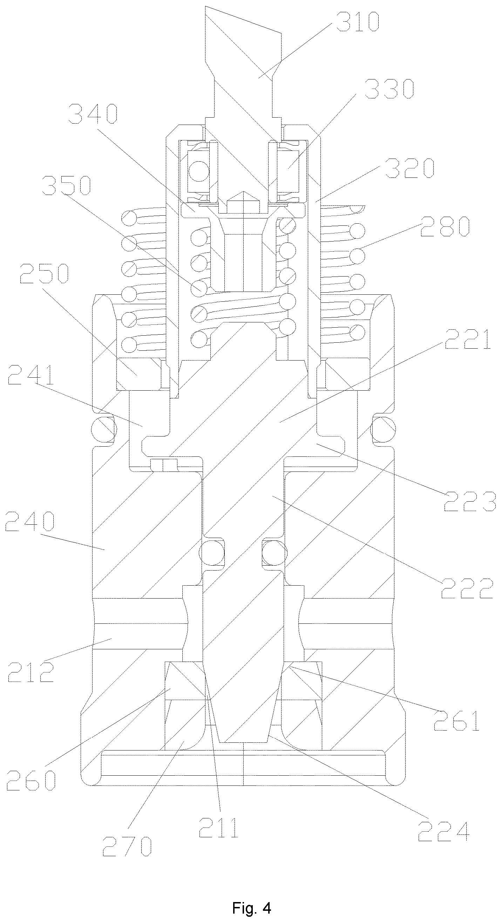

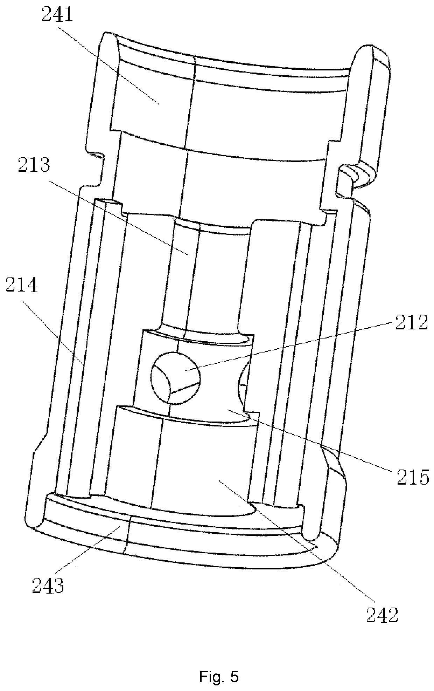

As shown in Fig. 1 to Fig. 7, some embodiments of the present invention provide an electronic expansion valve including: a valve seat portion 100, the valve seat portion 100 having a large valve port 101; and a valve needle component 200 disposed in a chamber of the valve seat portion 100. The valve needle component 200 includes a large valve needle portion 210 and a small valve needle 220. The large valve needle portion 210 has a small valve port 211 and is configured to open or close the large valve port 101. The small valve needle 220 is configured to open and close the small valve port 211.

In some embodiments, an opening degree of the small valve port 211 is adjusted through axial movement of the small valve needle 220, thereby enabling low-flow regulation. The on/off control for a high flow rate is achieved by the large valve needle portion 210 blocking or avoiding the large valve port 101. When the electronic expansion valve is in a closed state, the small valve needle 220 blocks the small valve port 211, and the large valve needle portion 210 blocks the large valve port 101; when the electronic expansion valve is in a flow regulation state, the small valve needle 220 axially moves to adjust the opening degree of the small valve port 211, while the large valve needle portion 210 blocks the large valve port 101, thereby achieving low-flow regulation; when the electronic expansion valve is in a fully open state, the small valve needle 220 moves to fully avoid the small valve port 211, and drives the large valve needle portion 210 to move axially until the large valve needle portion 210 completely avoids the large valve port 101, thereby achieving the fully open state.

The large valve needle portion 210 includes a valve needle body 240, the valve needle body 240 has the small valve port 211, and the small valve needle 220 is configured to close the small valve port 211; the valve needle body 240 has a guide hole 213, a first inner sealing ring 231 is provided between the small valve needle 220 and an inner wall of the guide hole 213, and the small valve needle 220 is movably in sealing engagement with the inner wall of the guide hole 213 via the first inner sealing ring 231; a sealing portion 105 is formed at a position where the small valve needle 220 abuts against the small valve port 211; a part of the valve chamber, in which an end of the small valve needle 220 away from the sealing portion 105 is located, is in communication with the small valve port 211; the first inner sealing ring 231 is located in a first inner sealing groove on an outer wall of the small valve needle 220, and a maximum diameter of the sealing portion 105 is smaller than an outer diameter of the first inner sealing ring 231; or, the first inner sealing ring 231 is located in a first inner sealing groove on an inner wall of the guide hole 213, and the maximum diameter of the sealing portion 105 is smaller than an inner diameter of the first inner sealing ring 231.

In the two installation methods of the first inner sealing ring 231 described above, the maximum diameter of the sealing portion 105 is smaller than the outer diameter of the first inner sealing ring 231, or the maximum diameter of the sealing portion 105 is smaller than the inner diameter of the first inner sealing ring 231. As a result, the small valve needle 220 is constantly subjected to a pressure difference generated between an inlet fluid and an outlet fluid during a static or moving state, such that the small valve needle no longer remains balanced. The pressure difference is eventually transmitted to a screw rod of the electronic expansion valve, thereby facilitating the resolution of the problem in which, during upward or downward movement of the screw rod, positional errors of the valve needle relative to the valve port occur even when the screw rod is rotated to a same position with respect to a nut sleeve of the electronic expansion valve.

The large valve needle portion 210 and the valve seat portion 100 may be integrally formed, or the large valve needle portion 210 may be fixedly connected to the valve seat portion 100, or the large valve needle portion 210 may be a part of the valve seat portion 100, or the large valve needle portion 210 may be movable.

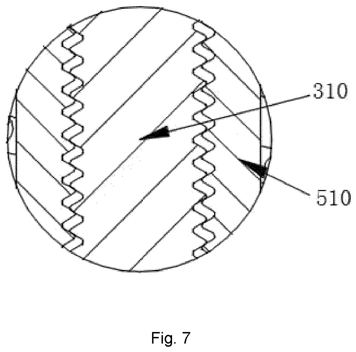

During the movement of the small valve needle 220, the small valve needle 220 is subjected to a friction force F1 and a resultant force F2 of fluid acting within the valve seat portion 100, where F1 < F2. That is, in some embodiments, the fluid force acting on the small valve needle 220 is always greater than the frictional force acting on the small valve needle 220. As a result, whether in a valve opening or valve closing process, a resultant force of the friction force and the fluid force acting on the small valve needle 220 always points in a consistent direction, such as upward or downward. The direction of the resultant force acting on the small valve needle 220 remains unchanged during the movement. During an assembly of the electronic expansion valve, there is inevitably an axial assembly clearance (as shown in Fig. 7) at the small valve needle 220. If the direction of the resultant force acting on the small valve needle 220 changes during the movement, it may cause axial shifting of the small valve needle 220 (with a shifting distance equal to the width of the assembly clearance), which results in unstable valve opening and closing and negatively impacts the accuracy of a flow rate curve. By defining F1 < F2 in some embodiments, the problem of axial shifting of the small valve needle 220 is avoided.

In some embodiments, the small valve needle 220 has a tapered section 224, and the sealing portion 105 is formed at a position where the tapered section 224 abuts against the small valve port 211. The tapered section 224 of the small valve needle 220 is in sealing engagement with the small valve port 211. The tapered section 224 serves to adjust flow rate, and the small valve port 211 supports the tapered section 224. When the small valve needle 220 seals the small valve port 211, the position of the small valve needle remains stable, ensuring that in a low-pulse, low-flow-rate adjustment state of the small valve needle 220 of the electronic expansion valve, an inflection point on the flow rate curve has high precision and falls within a narrow pulse range, thereby enhancing the flow adjustment precision of the small valve needle 220.

The large valve needle portion 210 further includes a small sealing gasket 260 disposed inside the valve needle body 240, the small valve port 211 includes a through hole in the small sealing gasket 260, an inner wall of the through hole is in sealing engagement with the tapered section 224 of the small valve needle 220, and an end of the through hole facing the first inner sealing ring 231 has a chamfered surface hole. The end of the through hole facing the first inner sealing ring 231 has the chamfered surface, which facilitates an insertion of the small valve needle 220 into the small valve port 211 and also enhances a sealing performance between the small valve needle 220 and the through hole, reducing wear of the small valve port 211 caused by the small valve needle 220 during the sealing process.

The valve seat portion 100 has a large valve port 101, and the valve needle body 240 is configured to close the large valve port 101; the valve needle body 240 is provided with a balance passage, and a part of the valve chamber in which an end of the valve needle body 240 away from the large valve port 101 is located is in communication with the large valve port 101 via the balance passage; a part of the valve chamber in which the end of the small valve needle 220 away from the sealing portion 105 is located is in communication with the small valve port 211 via the balance passage; and the large valve port 101 is in communication with the small valve port 211. A pressure difference between both ends of the valve needle component 200 can be reduced through the balance passage, which facilitates the opening and closing of the small valve port 211. By providing the large valve port 101 and due to a relatively large diameter of the large valve port 101, a high-flow function of the electronic expansion valve is achieved when the large valve port 101 is open.

In a specific embodiment, the valve seat portion 100 has a large valve port 101. The large valve needle portion 210 includes a valve needle body 240 and a small sealing gasket 260 disposed within the valve needle body 240. The small sealing gasket 260 has a small valve port 211. An inner surface of the small valve port 211 has a cylindrical section. The small valve needle 220 has a tapered section 224. The tapered section 224 is configured to be in sealing engagement with an inner surface of the cylindrical section. The large valve needle portion 210 is configured to open or close the large valve port 101.

In some embodiments, a reliable seal of the small valve port 211 is achieved through the cooperation between a tapered surface of the tapered section 224 of the small valve needle 220 and the inner surface of the cylindrical section in the small sealing gasket 260. In some embodiments, the tapered surface is provided on the tapered section 224 of the small valve needle 220 rather than inside the small sealing gasket 260. Compared with the prior art, the tapered surface for sealing is configured as an outer surface instead of an inner surface, so that the tapered surface can be more easily and precisely machined and measured, thereby reducing the production difficulty, increasing the yield rate, and thus reducing the production cost of the electronic expansion valve.

A diameter of the cylindrical section is smaller than a large-end diameter of the tapered section 224 and greater than a small-end diameter of the tapered section 224. In this way, after the tapered section 224 is inserted into the cylindrical section, a portion of the tapered section 224 is located inside the cylindrical section and an other portion is located outside the cylindrical section, resulting in a better sealing effect.

The inner surface of the small valve port 211 further includes a chamfered section 261, and a taper angle of the chamfered section 261 is greater than a taper angle of the tapered section 224. The chamfered section 261 is configured to remove burrs at an edge of the small valve port 211 and guide the insertion of the tapered section 224 into the cylindrical section.

In some embodiments, the valve needle body 240 has a guide hole 213, the small valve needle 220 has a sealing section 222, the sealing section 222 is axially movable through the guide hole 213; and the sealing section 222 has a tapered section 224, a small-end diameter of the tapered section 224 is smaller than a diameter of a constant-diameter section of the sealing section 222. In this way, an engagement between the guide hole 213 and the sealing section 222 serves to guide and limit the movement of the small valve needle 220.

In some embodiments, the valve needle component 200 further includes a first inner sealing ring 231. The sealing section 222 is provided with a first inner sealing groove, the first inner sealing ring 231 is installed in the first inner sealing groove, and an outer wall of the first inner sealing ring 231 abuts against the inner wall of the guide hole 213. Thus, the first inner sealing ring 231 serves to provide a sealing function, preventing internal leakage.

In some embodiments, due to the presence of the tapered section 224, a force-receiving area of the small valve needle 220 at the sealing position thereof within the small valve port 211 is smaller than a force-receiving area of the small valve needle 220 within the guide hole 213. Therefore, a resultant force of the fluid in communication with the large valve port 101 acting on the small valve needle 220 is always directed toward the small valve port 211.

In the case where fluid enters the electronic expansion valve through flow-through hole 102 and exits through the large valve port 101, a fluid pressure at the flow-through hole 102 is greater than a fluid pressure at the large valve port 101. The fluid at the flow-through hole 102 exerts an upward force (i.e., in a direction away from the large valve port 101) on the small valve needle 220, which is relatively large. The fluid at the large valve port 101 exerts a downward resultant force (i.e., in a direction toward the large valve port 101) on the small valve needle 220. The total force F2 exerted by the fluid inside the electronic expansion valve on the small valve needle 220 is upward. The frictional force F1 acting on the small valve needle 220 is downward when the valve is opened, and upward when the valve is closed, where F1 < F2. In this way, regardless of whether the small valve needle 220 opens or closes the valve, the resultant force of F1 and F2 is always directed upward, i.e., the resultant force acting on the small valve needle 220 is in a single direction and does not change, thereby preventing axial shifting of the small valve needle 220 during the movement.

Correspondingly, in the case where fluid flows out from the flow-through hole 102 and flows into the large valve port 101, the fluid pressure at the flow-through hole 102 is lower than the fluid pressure at the large valve port 101. The fluid at the flow-through hole 102 exerts an upward force (i.e., in a direction away from the large valve port 101) on the small valve needle 220. The fluid at the large valve port 101 exerts a downward resultant force (i.e., toward the large valve port 101) on the small valve needle 220, which is relatively large. The total force F2 exerted by the fluid inside the electronic expansion valve on the small valve needle 220 is downward. The frictional force F1 acting on the small valve needle 220 is downward when the valve is opened, and upward when the valve is closed, where F1 < F2. In this manner, regardless of whether the small valve needle 220 opens or closes the valve, the resultant force of F1 and F2 is always directed downward, i.e., the resultant force acting on the small valve needle 220 is in a single direction and does not change, thereby preventing axial shifting of the small valve needle 220 during the movement.

The valve needle component 200 further includes a second inner sealing ring 232. The large valve needle portion 210 is provided with a second inner sealing groove, the second inner sealing ring 232 is installed in the second inner sealing groove, and an outer wall of the second inner sealing ring 232 abuts against an inner wall of the valve seat portion 100. A circumferential sealing of the large valve needle portion 210 is achieved by the second inner sealing ring 232, thereby preventing internal leakage. A dimension of a sealing region between the valve needle body 240 and the large valve port 101 is substantially equal to an outer diameter of the second inner sealing ring 232, ensuring force balance of the valve needle body 240 within the valve chamber.

The electronic expansion valve further includes a screw rod assembly 300, which includes a small elastic member 350. An end of the small elastic member 350 abuts against the small valve needle 220. When the small valve port 211 is closed, the small elastic member 350 applies a force toward the small valve port 211 to the small valve needle 220, serving as a sealing preload force. A minimum value of the sealing preload force is F3, where F1 + F2 < F3.

In some embodiments, the screw rod assembly 300 further includes a screw rod 310, an assembly sleeve 320 and a bearing 330. The screw rod 310 is connected to an inner ring of the bearing 330, and an outer ring of the bearing 330 is positioned within the assembly sleeve 320. An end of the small elastic member 350 is in a limiting fit with the bearing 330, and an other end of the small elastic member 350 abuts against a limiting section 221.

The small elastic member 350 can improve the reliability of the small valve needle 220 in closing the small valve port 211, and can also provide buffering and protective functions. A reciprocating movement of the assembly sleeve 320 is guided by the valve seat ring 104. F1 + F2 < F3, which prevents the force exerted on the small valve needle 220 by fluid from pushing up the small valve needle 220, thereby ensuring the reliability of closing the small valve port 211.

The valve seat portion 100 includes a valve seat ring 104. The assembly sleeve 320 reciprocates along an inner wall of the valve seat ring 104, and the valve seat ring 104 serves to guide the assembly sleeve 320.

An operating principle of some embodiments is as follows:
When fluid enters from the flow-through hole 102 and exits through the small valve port 211, a portion of the small valve needle 220 located between the first inner sealing ring 231 and the sealing portion 105 is simultaneously subjected to a high-pressure fluid force from the flow-through hole 102, which acts in an axial direction of the electronic expansion valve and away from the small valve port 211, and a low-pressure fluid force from the small valve port 211, which acts in the axial direction of the electronic expansion valve and toward the small valve port 211. Due to the provision of the tapered section 224 of the small valve needle 220, a resultant force of the high-pressure fluid force and the low-pressure fluid force is F2, which is always directed in the axial direction of the electronic expansion valve and away from the small valve port 211. When the small valve needle 220 moves toward the small valve port 211, the first inner sealing ring 231 inside the small valve needle 220 is subjected to a frictional force F1, which is directed in the axial direction of the electronic expansion valve and away from the small valve port 211. Since the direction of F1 is the same as that of F2, a resultant force of F1 and F2 acting on the small valve needle 220 is in the axial direction of the electronic expansion valve and away from the small valve port 211. When the small valve needle 220 moves away from the small valve port 211, the first inner sealing ring 231 is subjected to a frictional force F1 that is directed in the axial direction of the electronic expansion valve and toward the small valve port 211. Since F1 is smaller than F2, the resultant force of F1 and F2 acting on the small valve needle 220 remains in the axial direction of the electronic expansion valve and away from the small valve port 211. Therefore, regardless of whether the small valve needle 220 moves upward or downward, the resultant force of the fluid force and the frictional force acting on the small valve needle 220 always remains in a same direction. This resultant force of the fluid force and the frictional force acts on the screw rod, causing an upper side surface of a thread of the screw rod to abut against an upper side surface of a thread of the nut sleeve at all times. When fluid flows out from the flow-through hole 102 and enters through the small valve port 211, regardless of whether the small valve needle 220 moves upward or downward, the resultant force of the fluid force and frictional force acting on the small valve needle 220 remains in a same direction, which is along the axial direction of the electronic expansion valve and toward the small valve port 211. The resultant force of the fluid force and frictional force acts on the screw rod, causing a lower side surface of the thread of the screw rod to abut against a lower side surface of a thread of a nut at all times.

A sidewall of the valve seat portion 100 is provided with a flow-through hole 102. The large valve needle portion 210 is provided with a plurality of side ports 212, which are in communication with the flow-through hole 102. The electronic expansion valve includes a closed state, a flow regulation state, and a fully open state. In the closed state, the small valve needle 220 blocks the small valve port 211 such that the small valve port 211 is not in communication with the side ports 212, and the large valve needle portion 210 blocks the large valve port 101 such that the large valve port 101 is not in communication with the flow-through hole 102. In the flow regulation state, the large valve needle portion 210 blocks the large valve port 101, and the small valve needle 220 axially moves to adjust the opening degree of the small valve port 211. The large valve port 101 is in communication with the side ports 212 via the small valve port 211. In the fully open state, the large valve needle portion 210 opens the large valve port 101, allowing the large valve port 101 to be directly in communication with the flow-through hole 102. In this way, the electronic expansion valve has functions of low-flow regulation and high-flow on/off control.

Wherein, the large valve needle portion 210 is provided with a guide hole 213, which is located on a side of the small valve port 211 away from the large valve port 101. The small valve needle 220 is capable of reciprocating through the guide hole 213 and is in sealing engagement with an inner wall of the guide hole 213. The guide hole 213 serves to guide the movement of the small valve needle 220.

The valve needle component 200 further includes a first inner sealing ring 231. The small valve needle 220 is provided with a first inner sealing groove, and the first inner sealing ring 231 is mounted in the first inner sealing groove. An outer wall of the first inner sealing ring 231 abuts against an inner wall of the valve seat portion 100, achieving a sealing effect, and thereby preventing internal leakage.

In some embodiments, the valve needle component 200 further includes a second inner sealing ring 232. The large valve needle portion 210 is provided with a second inner sealing groove, the second inner sealing ring 232 is mounted in the second inner sealing groove, and an outer wall of the second inner sealing ring 232 abuts against the inner wall of the valve seat portion 100. The second inner sealing ring 232 provides a sealing effect for the large valve needle portion 210.

The small valve needle 220 and the large valve needle portion 210 are in an axial limiting fit. The electronic expansion valve further includes a screw rod assembly 300. The screw rod assembly 300 is fixedly connected to the small valve needle 220 to drive the small valve needle 220 and the large valve needle portion 210 to reciprocate, thereby achieving the opening and closing actions of the small valve port 211 and the large valve port 101.

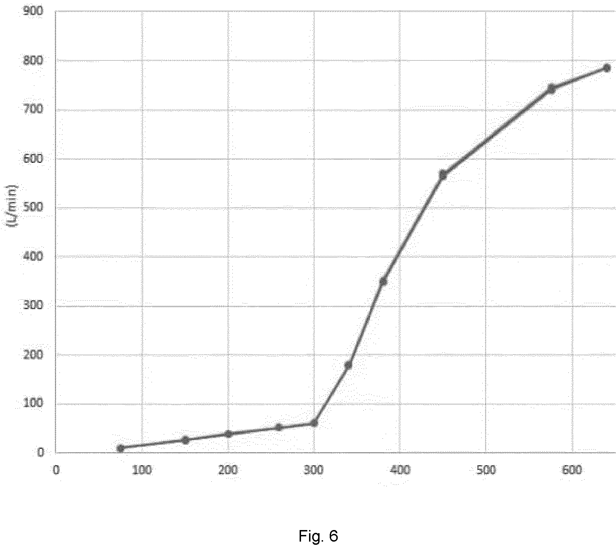

As shown in Fig. 6, in which a vertical axis represents flow rate of the electronic expansion valve, and a horizontal axis can be understood as valve opening degree, strokes of a valve needle, or strokes of the screw rod assembly 300. At a position where a value of the horizontal axis is approximately 320, there is a boundary between the opening and closing of the small valve port 211 and the large valve port 101. When the value on the horizontal axis is less than 320, the small valve port 211 is opened and closed independently, thereby achieving precise low-flow regulation (in this case, a throttling effect is provided). When the value on the horizontal axis is greater than 320, the large valve port 101 is gradually opened, and the flow rate increases rapidly, thereby achieving a high-flow-rate function (when the large valve port 101 is fully opened, no throttling effect is provided). Certainly, an actual flow rate curve of the electronic expansion valve is not limited to the form shown in Fig. 6 and may be adjusted according to working conditions and user requirements. The adjustment may be achieved by changing a size of the valve port, a shape of the inner wall of the valve port, a size of the valve needle, a shape of the outer wall of the valve needle, etc. In the prior art, a sealing gasket at the valve port is provided with a tapered surface for flow regulation in cooperation with the small valve needle, while the small valve needle is not provided with a tapered surface. When the small valve needle is closed and pressed against the valve port, the tapered surface of the sealing gasket is prone to deformation, resulting in a downward shift in the position of the small valve needle. As a result, a position of an inflection point becomes unstable, leading to low flow regulation accuracy. In the embodiment of the present structure, the tapered surface for flow regulation is provided on the small valve needle 220, which ensures the stability of the inflection point and improves the accuracy of flow regulation.

In some embodiments, the large valve needle portion 210 includes a valve needle body 240 and a limiting ring 250. The valve needle body 240 is provided with a limiting hole 241 and a guide hole 213, where an inner diameter of the guide hole 213 is smaller than an inner diameter of the limiting hole 241. The limiting ring 250 is fixed inside the limiting hole 241. The small valve needle 220 is configured to be capable of reciprocating through the guide hole 213 and be in sealing engagement with an inner wall of the guide hole 213. The limiting ring 250 is in a stop-fit with the small valve needle 220, thereby preventing the small valve needle 220 from separating from the large valve needle portion 210. In this way, an engagement between the small valve needle 220 and the limiting ring 250 defines a relative movement distance between the small valve needle 220 and the valve needle body 240, avoiding disengagement therebetween. Additionally, during the movement, the small valve needle 220 can open and close the small valve port 211 and drive the large valve needle portion 210 to move, thereby achieving the opening and closing of the large valve port 101.

In some embodiments, the small valve needle 220 includes a limiting section 221, a sealing section 222 and an annular stopper 223. The sealing section 222 passes through the guide hole 213, and an end portion of the sealing section 222 is used to open and close the small valve port 211. The limiting section 221 is located within the limiting hole 241. The annular stopper 223 is fixed to an outer circumferential surface of the limiting section 221 and is located between a bottom wall of the limiting hole 241 and the limiting ring 250. An outer diameter of the annular stopper 223 is greater than the inner diameter of the guide hole 213 and an inner diameter of the limiting ring 250, and an outer diameter of the limiting section 221 is smaller than the inner diameter of the limiting hole 241. An engagement between the annular stopper 223 and the limiting ring 250 defines a relative movement distance between the small valve needle 220 and the valve needle body 240.

A clearance is provided between the annular stopper 223 and the bottom wall of the limiting hole 241, thereby ensuring smooth movement of the small valve needle 220.

The limiting hole 241 has a limiting step. An end face of the limiting ring 250 abuts against the limiting step, and an outer wall of the limiting ring 250 is in an interference fit with and/or welded to an inner wall of the limiting hole 241. This structure ensures a reliable connection between the limiting ring 250 and the valve needle body 240.

In some embodiments, the small valve needle 220 is of an integrated structure, which facilitates processing and ensures good coaxiality. The valve needle body 240 is of an integrated structure, which facilitates processing and assembly, and coaxiality between the valve needle body 240 and the small valve needle 220 is easily guaranteed. The valve needle body 240 reciprocates along the valve seat portion 100 and is in sealing engagement with the inner wall of the valve seat portion 100, which enables the inner wall of the valve seat portion 100 to guide the valve needle body 240.

The electronic expansion valve also includes a screw rod assembly 300. The screw rod assembly 300 is fixedly connected to the limiting section 221 to drive the small valve needle 220 and the large valve needle portion 210 to reciprocate. A gap is provided between an outer wall of the screw rod assembly 300 and an inner wall of the limiting ring 250 to avoid generating resistance.

In some embodiments, a first passage 214 is provided inside the large valve needle portion 210. An end of the first passage 214 is in communication with the large valve port 101, and an other end of the first passage 214 is in communication with a chamber on a side of the large valve needle portion 210 away from the large valve port 101. The first passage 214 enables equal fluid pressure at both axial ends of the large valve needle portion 210 and both axial ends of the small valve needle 220, thereby avoiding or reducing the influence of fluid pressure on the movement of the large valve needle portion 210 and the small valve needle 220, and facilitating the opening and closing of the large valve port 101 and the small valve port 211. Furthermore, by providing the first passage 214 inside the large valve needle portion 210 instead of the small valve needle 220, machining is facilitated. Since the small valve needle 220 has a smaller diameter, this also avoids a problem that the strength of the small valve needle 220 is weakened due to the formation of holes.

In some embodiments, the large valve needle portion 210 includes a valve needle body 240 and a limiting ring 250. The limiting ring 250 is fixed inside the valve needle body 240. The small valve needle 220 is inserted into the valve needle body 240. The limiting ring 250 is in a stop-fit with the small valve needle 220 to prevent the small valve needle 220 from separating from the large valve needle portion 210. The valve needle body 240 has the first passage 214.

Further, the valve needle body 240 includes a limiting hole 241 and a guide hole 213. An inner diameter of the guide hole 213 is smaller than that of the limiting hole 241. The limiting ring 250 is fixed inside the limiting hole 241. The small valve needle 220 is capable of reciprocating through the guide hole 213 and is in sealing engagement with an inner wall of the guide hole 213. The first passage 214 is in communication with the limiting hole 241, such that the communication between the first passage 214 and the limiting hole 241 enables chambers at both ends of the large valve needle portion 210 to be in communication with each other.

In some embodiments, the electronic expansion valve further includes a screw rod assembly 300, which is fixedly connected to the small valve needle 220 to drive the small valve needle 220 and the large valve needle portion 210 for reciprocating movement. A through hole on the limiting ring 250 forms a second passage, an end of which is in communication with the first passage 214, and an other end is in communication with the chamber on the side of the large valve needle portion 210 away from the large valve port 101. The arrangement of the second passage prevents obstruction of fluid flow by the limiting ring 250 and the screw rod assembly 300.

In some embodiments, the electronic expansion valve further includes a valve tube 400 and a nut assembly 500. The valve tube 400 and the nut assembly 500 are both fixedly connected to the valve seat portion 100, and the nut assembly 500 is located within a chamber of the valve tube 400. A chamber between an outer wall of the nut assembly 500 and an inner wall of the valve tube 400 forms a rotor chamber, which is in communication with the first passage 214. The nut assembly 500 is in a threaded connection with the screw rod assembly 300. The screw rod assembly 300 is driven by electromagnetic force, and during rotation, the screw rod assembly 300 moves axially via a threaded engagement, thereby controlling the opening and closing of the valve port.

In some embodiments, the valve seat portion 100 includes a third passage 103, and the nut assembly 500 includes a fourth passage 501. The large valve port 101, the first passage 214, the second passage, the third passage 103, the fourth passage 501 and the rotor chamber are sequentially in communication. The first passage 214, the second passage, the third passage 103 and the fourth passage 501 form a balance passage. This configuration enables communication between the large valve port 101 and the rotor chamber, which facilitates pressure balance and avoids or reduces the obstruction of the movement of the valve needle component 200 by fluid pressure.

The valve seat portion 100 includes a valve seat ring 104. The screw rod assembly 300 passes through the valve seat ring 104. The third passage 103 is located in the valve seat ring 104. Thus, the valve seat ring 104 provides guiding and limiting functions for the screw rod assembly 300, thereby preventing the valve seat ring 104 from obstructing fluid flow. The valve seat ring 104 includes a cylindrical structure and an annular structure. The annular structure is located on an outer circumferential surface of the cylindrical structure. The screw rod assembly 300 passes through the cylindrical structure. The cylindrical structure guides the screw rod assembly 300, and the third passage 103 penetrates the annular structure.

In some embodiments, the nut assembly 500 includes a nut body 510 and a connecting plate 520. The connecting plate 520 is sleeved on the nut body 510 and is fixedly connected to the valve seat portion 100. A hole or a slot on the connecting plate 520 forms the fourth passage 501. Through the connecting plate 520, a fixed connection between the nut assembly 500 and the valve seat portion 100 is achieved, and the problem of fluid flow obstruction by the connecting plate 520 is avoided. In addition, the valve seat ring 104 is inserted into the nut body 510, which helps to ensure the coaxiality between the nut body 510 and the screw rod assembly 300.

In some embodiments, the valve seat portion 100 includes a large sealing gasket 110. The large sealing gasket 110 is disposed around the large valve port 101. The large valve port 101 is closed when an end portion of the large valve needle portion 210 abuts against the large sealing gasket 110. The large sealing gasket 110 is made of a soft material, so a contact area during sealing is large, ensuring reliable sealing and avoiding leakage.

The valve seat portion 100 includes an annular assembly groove. The annular assembly groove surrounds the large valve port 101 and accommodates the large sealing gasket 110. The large valve port 101 is closed when the end portion of the large valve needle portion 210 abuts against the large sealing gasket 110. A surface of the large sealing gasket 110 that is fitted with the large valve needle portion 210 serves as a sealing surface 111. The sealing surface 111 is disposed at an opening of the annular assembly groove. A chamber volume of the annular assembly groove is greater than a volume of the large sealing gasket 110 located in the annular assembly groove.

With this configuration, the chamber volume of the annular assembly groove is greater than the volume of the large sealing gasket 110 located therein, so that the annular assembly groove can accommodate the deformation of the large sealing gasket 110. This ensures that the sealing surface of the large sealing gasket 110 is not easily deformed, thereby ensuring the sealing performance of the large sealing gasket and improving the long-term reliability of the electronic expansion valve.

In some embodiments, the sealing surface 111 is exposed from the annular assembly groove, and remaining surfaces of the large sealing gasket 110 are located within the annular assembly groove. In this way, only the sealing surface 111 of the large sealing gasket 110 that is in engagement with the large valve needle portion 210 is exposed from the annular assembly groove, while the remaining surfaces of the large sealing gasket 110 are all located within the annular assembly groove. As such, an exposed surface of the large sealing gasket 110 is minimal, and even under cooling or heating, deformation is unlikely to occur. This ensures the sealing performance of the large sealing gasket 110 and improves the long-term reliability of the electronic expansion valve.

A surface of the large valve needle portion 210 that is in engagement with the sealing surface 111 is an arc-shaped surface, which increases the contact area and enhances the sealing effect.

At least one annular surface of the large sealing gasket 110 located in the annular assembly groove is in an interference fit with an inner wall of the annular assembly groove. This ensures the sealing effect and prevents leakage of the electronic expansion valve. After expanding upon heating, the large sealing gasket 110 can drive an outer circumferential surface of the large sealing gasket 110 into an interference fit with the inner wall of the annular assembly groove, thereby enhancing the sealing effect. After contracting upon cooling, the large sealing gasket 110 can drive an inner circumferential surface of the large sealing gasket 110 into an interference fit with the inner wall of the annular assembly groove, thereby enhancing the sealing effect.

In some embodiments, a gap between an outer wall of the large sealing gasket 110 located in the annular assembly groove and the inner wall of the annular assembly groove forms at least one buffer chamber. When the large sealing gasket 110 expands upon heating in a high-temperature operational environment, the buffer chamber can accommodate the deformation of the large sealing gasket 110 and avoid the expansion from affecting the sealing effect. The large sealing gasket 110 is made of a soft material.

In some embodiments, the valve seat portion 100 includes a large valve seat 120 and a small valve seat 130. The valve needle component 200 is movably disposed within the large valve seat 120, and the small valve seat 130 is connected to the large valve seat 120. The small valve seat 130 has the large valve port 101, and the annular assembly groove is provided between the small valve seat 130 and the large valve seat 120. In this way, the valve seat portion 100 is of a split structure, which facilitates formation of the annular assembly groove and assembly of the large sealing gasket 110.

In some embodiments, the small valve seat 130 has a first annular step 131, and an annular sidewall of the first annular step 131 is in a limiting fit with the inner circumferential surface of the large sealing gasket 110. A bottom wall of the first annular step 131 is in a limiting fit with a surface of the large sealing gasket 110 away from the large valve needle portion 210. The first annular step 131 serves to limit and encase the large sealing gasket 110 in an axial direction of the large sealing gasket 110.

Additionally, an annular inner wall of the large valve seat 120 is in a limiting fit with an outer circumferential surface of the large sealing gasket 110, providing radial limiting and encasing functions for the large sealing gasket 110.

The annular inner wall of the large valve seat 120 has a compression ring 121, which is in a limiting fit with a side of the large sealing gasket 110 facing the large valve needle portion 210. The compression ring 121 serves to limit the large sealing gasket 110 in the axial direction and reduces the exposed surface of the large sealing gasket 110. As such, the large sealing gasket 110 is less prone to deformation even upon cooling or heating, thereby ensuring the sealing performance of the large sealing gasket 110.

In some embodiments, the large sealing gasket 110 has a second annular step 112. The second annular step 112 is disposed around the sealing surface 111. An end surface of the compression ring 121 is in a limiting fit with a bottom wall of the second annular step 112, and an inner circumferential surface of the compression ring 121 is in a limiting fit with an annular sidewall of the second annular step 112. Through the cooperation of the second annular step 112 and the compression ring 121, both radial and axial limiting functions are provided for the large sealing gasket 110, thereby enhancing a fixation effect of the large sealing gasket 110.

An end of the inner circumferential surface of the compression ring 121 facing the bottom wall of the second annular step 112 has a first chamfer 1211. A first gap is formed between the first chamfer 1211 and the large sealing gasket 110. An end of an inner circumferential surface of the large sealing gasket 110 away from the large valve needle portion 210 has a second chamfer 114. A second gap is formed between the second chamfer 114 and the large sealing gasket 110. An end of an outer circumferential surface of the large sealing gasket 110 facing the large valve needle portion 210 has a third chamfer 115. A third gap is formed between the third chamfer 115 and the large sealing gasket 110. The first gap, the second gap and the third gap each function as buffer chambers.

By providing the chamfers, the assembly of the large sealing gasket 110 is facilitated. Moreover, a buffer chamber is formed at each chamfer and can accommodate the deformation of the large sealing gasket 110 when the large sealing gasket 110 expands upon heating, preventing a sealing surface from becoming uneven due to expansion, thus avoiding the influence on the sealing effect caused by the expansion of the large sealing gasket 110.

In some embodiments, a portion of the small valve seat 130 extends into the large valve seat 120. After an interference fit is formed between the small valve seat 130 and the large valve seat 120, welding is performed. The interference fit ensures high coaxiality, reliable connection, and good sealing performance. A plurality of flow-through holes 102 are circumferentially distributed on the large valve seat 120. The plurality of flow-through holes 102 are in communication with a chamber inside the large valve seat 120 and are configured to deliver fluid.

Each of the plurality of flow-through holes 102 of the valve seat portion 100 may be connected to a connecting pipe or be in communication with a chamber inside another seat structure. The large valve port 101 may be connected to a connecting pipe or be in communication with a chamber inside another seat structure.

In some embodiments of the present invention, the valve seat portion 100 includes a large sealing gasket 110 and a reinforced sealing ring 140. The large sealing gasket 110 is disposed around the large valve port 101. The reinforced sealing ring 140 is disposed between the large sealing gasket 110 and an inner wall of the valve seat portion 100. The large valve port 101 is closed when an end portion of the large valve needle portion 210 abuts against the large sealing gasket 110. Through the large sealing gasket 110, a contact area is large during sealing, thereby ensuring reliable sealing and preventing leakage. With the configuration of the reinforced sealing ring 140, a sealing effect is further improved.

The valve seat portion 100 includes an annular assembly groove. A surface of the large sealing gasket 110 that is in engagement with the large valve needle portion 210 serves as a sealing surface 111. The sealing surface 111 is exposed from the annular assembly groove, while the remaining surfaces of the large sealing gasket 110 are located within the annular assembly groove. In this way, reliable limiting of the large sealing gasket 110 is achieved. The large sealing gasket 110 is not easily deformed or damaged or prone to failure under pressure or temperature changes, resulting in a long service life.

The valve seat portion 100 includes a large valve seat 120 and a small valve seat 130. The valve needle component 200 is movably disposed within the large valve seat 120, and the small valve seat 130 is fixedly connected to the large valve seat 120. The small valve seat 130 has the large valve port 101, and the annular assembly groove is formed between the small valve seat 130 and the large valve seat 120. The large sealing gasket 110 and the reinforced sealing ring 140 are clamped within the annular assembly groove. The reinforced sealing ring 140 abuts against an inner wall of the annular assembly groove. In this way, the valve seat portion 100 is of a split structure, which facilitates the formation of the annular assembly groove and the assembly of the large sealing gasket 110 and the reinforced sealing ring 140.

Further, a side of the large sealing gasket 110 away from the large valve needle portion 210 has a third annular step 113. The reinforced sealing ring 140 is mounted in the third annular step 113, and the reinforced sealing ring 140 abuts against the large valve seat 120 and/or the small valve seat 130. The third annular step 113 is configured to accommodate the reinforced sealing ring 140 and also serves to limit the reinforced sealing ring 140.

The small valve seat 130 has a first annular step 131. An annular sidewall of the first annular step 131 is in a limiting fit with an inner circumferential surface of the large sealing gasket 110. A bottom wall of the first annular step 131 is in a limiting fit with a surface of the large sealing gasket 110 away from the large valve needle portion 210. The reinforced sealing ring 140 abuts against the bottom wall of the first annular step 131. In this way, the first annular step 131 provides reliable limiting for the large sealing gasket 110, and the engagement between the reinforced sealing ring 140 and the first annular step 131 improves a sealing effect.

In some embodiments, the large valve needle portion 210 includes a valve needle body 240 and a small sealing gasket 260 disposed inside the valve needle body 240. The small sealing gasket 260 has the small valve port 211 and is made of a soft material. Thus, the small valve needle 220 has a large contact area with the small sealing gasket 260, ensuring a good sealing effect and preventing leakage when the small valve port 211 is closed.

The valve needle body 240 has an assembly recess 242, an opening of the assembly recess 242 faces the large valve port 101. The small sealing gasket 260 is positioned within the assembly recess 242. The assembly recess 242 facilitates an installation of the small sealing gasket 260.

A bottom wall of the assembly recess 242 has an annular limiting surface, and the small sealing gasket 260 abuts against the annular limiting surface, which provides axial limiting for the small sealing gasket 260.

Further, the large valve needle portion 210 also includes a limiting sleeve 270. The small sealing gasket 260 and the limiting sleeve 270 are both located inside the valve needle body 240, and at least a portion of the small sealing gasket 260 is disposed between the valve needle body 240 and the limiting sleeve 270. The small sealing gasket 260 has the small valve port 211. The valve needle body 240 is configured to open or close the large valve port 101, and the small valve needle 220 is configured to open or close the small valve port 211. An end of an inner circumferential surface of the limiting sleeve 270 facing the large valve port 101 has a fillet or chamfer.

In some embodiments, reliable sealing of the small valve port 211 is achieved through the engagement between the small valve needle 220 and the small sealing gasket 260. The small sealing gasket 260 is fixed through the limiting sleeve 270. Since the end of the inner circumferential surface of the limiting sleeve 270 facing the large valve port 101 has the fillet or chamfer, fluid encounters minimal resistance when passing through the fillet or chamfer. This helps avoid fluid impact and abrupt redirection, thereby reducing noise as the fluid passes through the small valve port 211 and the limiting sleeve 270, which in turn reduces the noise of the electronic expansion valve. The limiting sleeve 270, the small sealing gasket 260 and the small valve needle 220 are arranged coaxially.

The valve needle body 240 has an assembly recess 242, an opening of the assembly recess 242 faces the large valve port 101. The small sealing gasket 260 is located inside the assembly recess 242. The assembly recess 242 facilitates an installation of the small sealing gasket 260.

The bottom wall of the assembly recess 242 has an annular limiting surface, and the small sealing gasket 260 abuts against the annular limiting surface, which provides axial limiting for the small sealing gasket 260.

Moreover, at least a portion of the limiting sleeve 270 is positioned in the assembly recess 242, and an outer circumferential surface of the limiting sleeve 270 is in an interference fit with and/or is welded to an inner circumferential surface of the assembly recess 242. This type of fit ensures reliable connection and high coaxiality.

An end of an outer circumferential surface of the small sealing gasket 260 away from the large valve port 101 has a chamfer. This facilitates pressing the small sealing gasket 260 into the assembly recess 242.

An end of the valve needle body 240 facing the large valve port 101 has an avoidance groove 243. The assembly recess 242 is located at a bottom wall of the avoidance groove 243. The valve seat portion 100 includes a large sealing gasket 110 surrounding the large valve port 101, and an edge of an opening of the avoidance groove 243 is in sealing engagement with an end portion of the large sealing gasket 110. An end surface of the limiting sleeve 270 facing the large valve port 101 is flush with a bottom wall of the avoidance groove 243, or the end surface of the limiting sleeve 270 facing the large valve port 101 protrudes from the bottom wall of the avoidance groove 243. The end surface of the limiting sleeve 270 is flush with the bottom wall of the avoidance groove 243, which prevents fluid resistance caused by misalignment of a connection position. This also facilitates the definition of a press-in depth when pressing the limiting sleeve 270 into the assembly recess 242, making assembly easier. In some embodiments, when an inner wall of the assembly recess 242 is welded to the limiting sleeve 270, a welded portion is positioned away from an end (i.e., a sealing end for sealing) of the large valve needle portion 210, which avoids the influence of welding heat on the sealing end of the large valve needle portion 210, thus preventing deformation of the sealing end of the large valve needle portion 210 due to heat.

The small sealing gasket 260 is made of a soft material, which provides a better sealing effect. An end of the outer circumferential surface of the small sealing gasket 260 away from the large valve port 101 has a chamfer, facilitating pressing the small sealing gasket 260 into the assembly recess 242.

In some embodiments, a sidewall of the valve seat portion 100 is provided with a flow-through hole 102, the large valve needle portion 210 is provided with a plurality of side ports 212 and a flow chamber 215. An end of each of the plurality of side ports 212 is in communication with the flow-through hole 102, and an other end of the each of the plurality of side ports 212 is in communication with the flow chamber 215. At least a portion of the small valve needle 220 is located within the flow chamber 215. When the small valve port 211 is open, the small valve port 211 is in communication with the flow chamber 215. An end of the each of the plurality of side ports 212 in communication with the flow chamber 215 is located in a middle portion of a sidewall of the flow chamber 215. The plurality of side ports 212 are circumferentially distributed around the large valve needle portion 210. The flow chamber 215 is in communication with one or more of the plurality of side ports 212. The each of the plurality of side ports 212 extends radially along the large valve needle portion 210. An aperture of the each of the plurality of side ports 212 is smaller than an aperture of the flow chamber 215, so that the fluid can be buffered after entering the larger flow chamber 215 from the smaller side ports 212.

An end of the each of the plurality of side ports 212 in communication with the flow chamber 215 is positioned at a middle portion of the sidewall of the flow chamber 215. The end of the each of the plurality of side ports 212 is prone to burrs, so providing the end of the each of the plurality of side ports 212 in communication with the flow chamber 215 at the middle portion of the sidewall of the flow chamber 215 facilitates the removal of burrs of the each of the plurality of side ports 212 during the processing of the flow chamber 215.

In some embodiments, the valve needle component 200 has a first passage 214, an end of which is in communication with the large valve port 101, and an other end of which is in communication with the chamber on the side of the large valve needle portion 210 away from the large valve port 101. This design enables the fluid pressure at both ends of the large valve needle portion 210 to be equal, minimizing a pressure difference across both ends of the large valve needle portion 210, thereby reducing the impact of fluid pressure on the opening and closing of the valve port, and making the operation easier.

In some embodiments, the valve seat portion 100 has a guiding inner wall. A second inner sealing ring is provided between the large valve needle portion 210 and the guiding inner wall. An outer wall of the large valve needle portion 210 is movably in sealing engagement with the guiding inner wall via the second inner sealing ring. An end of the large valve needle portion 210 facing the large valve port 101 is a sealing end, and the valve seat portion 100 is provided with a large sealing gasket 110 surrounding the large valve port 101. An annular sealing line is formed at a position where the sealing end is just in contact with the large sealing gasket 110. A diameter of the annular sealing line is equal to an outer diameter of the second inner sealing ring. In this way, the contact areas between both axial ends of the large valve needle portion 210 and the fluid are equal, and the fluid pressure across both axial ends of the large valve needle portion 210 is equal, achieving pressure balance, thus ensuring smoother and more reliable opening and closing of the valve port.

In some embodiments, the valve needle component 200 further includes a large elastic member 280. The large elastic member 280 is located within the chamber of the valve seat portion 100. The large elastic member 280 is located on a side of the large valve needle portion 210 away from the large valve port 101. An end of the large elastic member 280 abuts against the inner wall of the valve seat portion 100, and an other end of the large elastic member 280 abuts against the large valve needle portion 210. The large elastic member 280 applies a force towards the large valve port 101 on the large valve needle portion 210, thereby improving a closing effect of the large valve port 101 and preventing incomplete closure and leakage. In some embodiments, the large elastic member 280 is a spring and is in a compressed state.

The valve seat portion 100 is provided with a valve seat ring 104, and an end of the large elastic member 280 abuts against the valve seat ring 104, which provides axial limiting for the large elastic member 280. The valve seat ring 104 includes a cylindrical structure and an annular structure. The annular structure is located on an outer circumferential surface of the cylindrical structure. The screw rod assembly 300 passes through the cylindrical structure. The cylindrical structure guides the screw rod assembly 300, and the end of the large elastic member 280 abuts against the annular structure.

The electronic expansion valve also includes a screw rod assembly 300, which is fixedly connected to the small valve needle 220 to drive the reciprocating movement of the small valve needle 220 and the large valve needle portion 210. The screw rod assembly 300 passes through the large elastic member 280. The screw rod assembly 300 also passes through the valve seat ring 104, which provides guiding and limiting functions for the screw rod assembly 300.

The large valve needle portion 210 includes a valve needle body 240 and a limiting ring 250. The limiting ring 250 is fixed within a limiting hole 241 of the valve needle body 240, and the other end of the large elastic member 280 abuts against the limiting ring 250. A portion of the large elastic member 280 is located inside the limiting hole 241. The limiting hole 241 provides a radial limiting function for the large elastic member 280, and the limiting ring 250 can bear the pressure of the large elastic member 280, thereby transmitting the pressure to the valve needle body 240.

The screw rod assembly 300 passes through the limiting ring 250, and/or the small valve needle 220 passes through the limiting ring 250. The small valve needle 220 and the limiting ring 250 are in axial limiting engagement. The limiting ring 250 also serves to limit the small valve needle 220, preventing the small valve needle 220 from disengaging from the valve needle body 240.

In some embodiments, the large valve needle portion 210 includes a valve needle body 240 and a small sealing gasket 260 disposed within the valve needle body 240. The small sealing gasket 260 has a small valve port 211. The small valve needle 220 has a tapered section 224. The tapered section 224 is configured to be in sealing engagement with an inner surface of the small valve port 211. With this configuration, the tapered section 224 has a large contact area with the small sealing gasket 260, resulting in a good sealing effect for the small valve port 211. Additionally, since the small valve needle 220 has the tapered section 224, a relative position of the tapered section 224 and the small valve port 211 can be adjusted to control the opening degree and flow variation of the small valve port 211, making it easy to achieve a desired flow rate curve.

An inner wall of the small valve port 211 has a chamfered section 261, which is in sealing engagement with the tapered section 224. A taper angle of the chamfered section 261 is larger than a taper angle of the tapered section 224. Through the engagement between the chamfered section 261 and the tapered section 224, a sealing effect during the closing of the small valve port 211 is improved, and a desired flow rate curve can be more easily achieved.

Moreover, in some embodiments, a tapered surface on the outer wall of the small valve needle 220 is easy to machine, allowing a tapered surface inside the small valve port 211 to be made relatively short. This makes the machining and inspection easier, reducing the difficulty of processing and inspection and improving the yield.

The valve needle body 240 has a guide hole 213, and the small valve needle 220 has a sealing section 222. The sealing section 222 is axially movable through the guide hole 213. The sealing section 222 has a tapered section 224 with a small-end diameter of the tapered section 224 being smaller than a diameter of the constant-diameter section of the sealing section 222. Through the engagement of the guide hole 213 and the sealing section 222, the movement of the small valve needle 220 can be guided, ensuring the coaxiality between the small valve needle 220 and the small valve port 211.

A sidewall of the valve seat portion 100 is provided with a flow-through hole 102. The valve needle body 240 is provided with a plurality of side ports 212. An end of each of the plurality of side ports 212 is in communication with the flow-through hole 102. When the small valve port 211 is opened, the small valve port 211 is in communication with an other end of the each of the plurality of side ports 212. When the small valve port 211 or the large valve port 101 is opened, the large valve port 101 is in communication with the flow-through hole 102, enabling the flow of fluid.

In some embodiments, the valve needle component 200 further includes a first inner sealing ring 231. The sealing section 222 is provided with a first inner sealing groove, the first inner sealing ring 231 is mounted in the first inner sealing groove, and an outer wall of the first inner sealing ring 231 abuts against the inner wall of the guide hole 213. The first inner sealing ring 231 can seal a gap between the inner wall of the guide hole 213 and the outer wall of the sealing section 222, preventing leakage.

During the movement of the small valve needle 220, a frictional force F1 exists between the first inner sealing ring 231 and the inner wall of the guide hole 213, and the small valve needle 220 is subjected to a resultant force F2 of fluid within the valve seat portion 100, where F1 < F2. This means that in this embodiment, the force exerted by the fluid on the small valve needle 220 is always greater than the friction force exerted on the small valve needle 220. As a result, during both the valve opening and closing process, the resultant force of the frictional force and fluid force acting on the small valve needle 220 always remains in a defined direction, for example, upward or downward. The direction of the resultant force acting on the small valve needle 220 does not change during the movement. During the assembly of the electronic expansion valve, an axial assembly clearance is inevitably present in the small valve needle 220. When the direction of the resultant force acting on the small valve needle 220 changes during the movement, it may cause axial shifting of the small valve needle 220 (with a shifting distance equal to a width of the assembly clearance), which results in unstable valve opening and closing and negatively impacts the accuracy of a flow rate curve. By defining F1 < F2 in some embodiments, the problem of axial shifting of the small valve needle 220 is avoided.

In some embodiments, the small valve needle 220 also includes a limiting section 221, which is located on a side of the guide hole 213 away from the large valve port 101 and is connected to the sealing section 222. The electronic expansion valve further includes a screw rod assembly 300 and a nut assembly 500. The screw rod assembly 300 is in a threaded connection with the nut assembly 500. The screw rod assembly 300 is fixedly connected to the limiting section 221 to drive the small valve needle 220 and the large valve needle portion 210 to reciprocate. A thread clearance exists at a threaded engagement position between the screw rod assembly 300 and the nut assembly 500. If the resultant force on the small valve needle 220 changes during the movement, the resultant force acting on the small valve needle 220 will be transmitted to the threaded engagement position, causing the small valve needle 220 to shift along the thread clearance. Through the above configuration, the resultant force acting on the small valve needle 220 always remains in a same direction. When transmitted to the threaded engagement position, the resultant force always ensures that the screw rod assembly 300 and the nut assembly 500 will abut against each other in a same direction at the threaded engagement position, which prevents the screw rod assembly 300 from shifting along the thread clearance, avoiding shifting of the small valve needle 220, thereby ensuring the stability of the small valve needle 220 in opening and closing the small valve port 211 and maintaining the consistency and stability of the flow rate curve during the opening and closing of the small valve port 211.

In some embodiments, the screw rod assembly 300 includes a screw rod 310, an assembly sleeve 320, a bearing 330 and a small elastic member 350. The screw rod 310 is connected to an inner ring of the bearing 330, and an outer ring of the bearing 330 is located within the assembly sleeve 320. An end of the small elastic member 350 is in limiting engagement with the bearing 330, and an other end of the small elastic member 350 abuts against the limiting section 221. The small elastic member 350 exerts a force toward the small valve port 211 on the small valve needle 220. The assembly sleeve 320 and the limiting section 221 are fixedly connected. The valve seat portion 100 includes a valve seat ring 104, and the assembly sleeve 320 reciprocates along the inner wall of the valve seat ring 104. The small elastic member 350 can enhance the reliability of the small valve needle 220 in closing the small valve port 211 and also provides buffering and protective functions. The valve seat ring 104 can guide the reciprocating motion of the assembly sleeve 320.

The force exerted by the small elastic member 350 on the small valve needle 220 is denoted as F3, where F1 + F2 < F3. This arrangement prevents the fluid force exerted on the small valve needle 220 from pushing up the small valve needle 220, thereby ensuring the reliability of closing the small valve port 211.

The valve needle component 200 further includes a large elastic member 280, which is located within the chamber of the valve seat portion 100. The large elastic member 280 is positioned on a side of the large valve needle portion 210 away from the large valve port 101. An end of the large elastic member 280 abuts against the inner wall of the valve seat portion 100, and an other end of the large elastic member 280 abuts against the large valve needle portion 210. The large elastic member 280 is sleeved outside the assembly sleeve 320. The large elastic member 280 exerts an elastic force on the large valve needle portion 210 to ensure the reliable closure of the large valve port 101. Through the above assembly method, structures are compact, preventing the electronic expansion valve from becoming too large in size.

In some embodiments, the valve seat portion 100 includes a large valve seat 120 and a small valve seat 130. The valve needle component 200 is movably disposed within the large valve seat 120. The small valve seat 130 is fixedly connected to the large valve seat 120. The small valve seat 130 has the large valve port 101. A plurality of flow-through holes 102 are circumferentially distributed on the large valve seat 120 and are in communication with a chamber inside the large valve seat 120.

The plurality of flow-through holes 102 of the valve seat portion 100 may be connected to connecting pipes or be in communication with a chamber inside another seat structure. The large valve port 101 may be connected to a connecting pipe or be in communication with a chamber inside another seat structure.

The valve seat portion 100 further includes a first outer sealing ring 151. An outer wall of the large valve seat 120 is provided with a first outer sealing groove, and the first outer sealing ring 151 is mounted in the first outer sealing groove. As such, the first outer sealing ring 151 can provide a sealing effect for an outer wall of the valve seat portion 100. The valve seat portion 100 further includes a second outer sealing ring 152. An outer wall of the small valve seat 130 is provided with a second outer sealing groove, and the second outer sealing ring 152 is installed in the second outer sealing groove. The plurality of flow-through holes 102 are located between the first outer sealing ring 151 and the second outer sealing ring 152. As such, the valve seat portion 100 can achieve a good sealing effect when connected with other seat structures.

The large valve needle portion 210 is provided with a plurality of side ports 212 and a flow chamber 215. An end of each of the plurality of side ports 212 is in communication with the plurality of flow-through holes 102, and an other end of the each of the plurality of side ports 212 is in communication with the flow chamber 215. When the small valve needle 220 passes through the flow chamber 215 and the small valve port 211 is opened, the small valve port 211 is in communication with the flow chamber 215. The flow chamber 215 is in communication with one or more of the plurality of side ports 212.

The end of the each of the plurality of side ports 212 in communication with the flow chamber 215 is positioned at a middle portion of the sidewall of the flow chamber 215. The end of the each of the plurality of side ports 212 is prone to burrs, so providing the end of the each of the plurality of side ports 212 in communication with the flow chamber 215 at the middle portion of the sidewall of the flow chamber 215 facilitates the removal of burrs of the plurality of side ports 212 during the processing of the flow chamber 215. The plurality of side ports 212 are circumferentially distributed along the large valve needle portion 210. Each of the plurality of side ports 212 extends in a radial direction of the large valve needle portion 210.

In some embodiments, the valve needle component 200 has a first passage 214, an end of which is in communication with the large valve port 101, and an other end of which is in communication with a chamber of a side of the large valve needle portion 210 away from the large valve port 101. This design enables the fluid pressure at both ends of the large valve needle portion 210 to be equal, minimizing the pressure difference across both ends of the large valve needle portion 210, thereby reducing the impact of fluid pressure on the opening and closing of the valve port, and making the operation easier.

In some embodiments, the valve seat portion 100 has a guiding inner wall, the large valve needle portion 210 reciprocates along the guiding inner wall. An outer wall of the large valve needle portion 210 is in sealing engagement with the guiding inner wall. An end of the large valve needle portion 210, facing the large valve port 101, is the sealing end. The valve seat portion 100 is provided with a large sealing gasket 110, which is arranged around the large valve port 101. During the movement of the sealing end toward the large valve port 101, an annular sealing line is formed at a position where the sealing end is just in contact with the large sealing gasket 110. A diameter of the annular sealing line is equal to an inner diameter of the guiding inner wall. In this way, contact areas between both axial ends of the large valve needle portion 210 and the fluid are equal, and the fluid pressure across both axial ends of the large valve needle portion 210 is equal, achieving pressure balance, thus ensuring smoother and more reliable opening and closing of the valve port.

The valve needle component 200 further includes a second inner sealing ring 232. An outer circumferential surface of the large valve needle portion 210 is provided with a second inner sealing groove. The second inner sealing ring 232 is installed in the second inner sealing groove, and an outer wall of the second inner sealing ring 232 abuts against an inner wall of the valve seat portion 100, thereby preventing internal leakage.

The small valve needle 220 and the large valve needle portion 210 are in an axial limiting fit. The electronic expansion valve further includes a screw rod assembly 300. The screw rod assembly 300 is fixedly connected to the small valve needle 220 to drive the small valve needle 220 and the large valve needle portion 210 to reciprocate.

In some embodiments, the screw rod assembly 300 includes a screw rod 310, an assembly sleeve 320, a bearing 330, a bushing 340 and a small elastic member 350. The screw rod 310 is connected to an inner ring of the bearing 330, and an outer ring of the bearing 330 is located inside the assembly sleeve 320 and is in limiting engagement with the assembly sleeve 320. The bushing 340 abuts against a side of the outer ring of the bearing 330, which faces the large valve port 101. The small elastic member 350 is sleeved on the bushing 340. An end of the small elastic member 350 away from the bearing 330 abuts against the small valve needle 220, and the assembly sleeve 320 is fixedly connected to the small valve needle 220. The small elastic member 350 can exert a preload force toward the small valve port 211 on the small valve needle 220, ensuring reliable closure of the small valve port 211 and preventing leakage. The small elastic member 350 also provides a cushioning effect to prevent structural damage caused by the excessive axial displacement of the screw rod 310.

The bushing 340 has a through hole, which provides clearance to avoid contact with the inner ring of the bearing 330 and an end portion of the screw rod 310. Or, the bushing 340 has a groove with an opening facing the screw rod 310. The groove of the bushing 340 avoids the inner ring of the bearing 330 and an end portion of the screw rod 310. An end of the bushing 340 facing the large valve port 101 is a solid structure. The end of the bushing 340 facing the large valve port 101 is configured as the solid structure, preventing impurities from entering the bearing 330, thereby extending a service life of the bearing 330.

The assembly sleeve 320 includes an assembly cylinder and an annular stop wall. The annular stop wall is located at an end of the assembly cylinder away from the large valve port 101. A portion of the small valve needle 220 is inserted into the assembly cylinder and is fixedly connected to the assembly cylinder, and the outer ring of the bearing 330 abuts against the annular stop wall, thereby achieving a fixed installation of the bearing 330.

The foregoing is merely some embodiments of the present invention and is not intended to limit the present invention which may be subject to various modifications and variations to those skilled in the art. Any modification, equivalent replacement, improvement, etc. made within the spirit and principles of the present invention should be included in the scope of protection of the present invention.

## Claims

1. An electronic expansion valve, comprising:
a valve seat portion (100), the valve seat portion (100) having a valve chamber;
a valve needle component (200) disposed in the valve chamber of the valve seat portion (100), wherein the valve needle component (200) comprises a large valve needle portion (210) and a small valve needle (220), the large valve needle portion (210) comprises a valve needle body (240), the valve needle body (240) has a small valve port (211), and the small valve needle (220) is configured to close the small valve port (211);
wherein the valve needle body (240) has a guide hole (213), a first inner sealing ring (231) is disposed between the small valve needle (220) and an inner wall of the guide hole (213), the small valve needle (220) is in movable sealing engagement with the inner wall of the guide hole (213) via the first inner sealing ring (231); a sealing portion (105) is formed at a position where the small valve needle (220) abuts against the small valve port (211), and a part of the valve chamber, in which an end of the small valve needle (220) away from the sealing portion (105) is located, is in communication with the small valve port (211);
wherein the first inner sealing ring (231) is located in a first inner sealing groove on an outer wall of the small valve needle (220), and a maximum diameter of the sealing portion (105) is smaller than an outer diameter of the first inner sealing ring (231); or, the first inner sealing ring (231) is located in a first inner sealing groove on the inner wall of the guide hole (213), and a maximum diameter of the sealing portion (105) is smaller than an inner diameter of the first inner sealing ring (231).

2. The electronic expansion valve according to claim 1, wherein
when the first inner sealing ring (231) is located in the first inner sealing groove on the inner wall of the guide hole (213), a frictional force F1 exists between the first inner sealing ring (231) and the outer wall of the small valve needle (220), and the small valve needle (220) is subjected to a resultant force F2 of fluid acting within the valve seat portion (100), wherein F1 < F2;
when the first inner sealing ring (231) is located in the first inner sealing groove on the outer wall of the small valve needle (220), a frictional force F1 exists between the first inner sealing ring (231) and the inner wall of the guide hole (213), and the small valve needle (220) is subjected to a resultant force F2 of fluid acting within the valve seat portion (100), wherein F1 < F2.

3. The electronic expansion valve according to claim 2, wherein the electronic expansion valve further comprises a screw rod assembly (300), which comprises a small elastic member (350), and an end of the small elastic member (350) abuts against the small valve needle (220);
when the small valve port (211) is closed, the small elastic member (350) applies a force toward the small valve port (211) to the small valve needle (220), serving as a sealing preload force, and a minimum value of the sealing preload force is F3, where F1 + F2 < F3.

4. The electronic expansion valve according to claim 1, wherein the small valve needle (220) has a sealing section (222), the sealing section (222) axially movably penetrates through the guide hole (213), the sealing section (222) has the first inner sealing groove, the first inner sealing ring (231) is mounted in the first inner sealing groove, and an outer wall of the first inner sealing ring (231) abuts against the inner wall of the guide hole (213).

5. The electronic expansion valve according to claim 1, wherein the small valve needle (220) has a tapered section (224), and the sealing portion (105) is formed at a position where the tapered section (224) abuts against the small valve port (211).

6. The electronic expansion valve according to claim 1, wherein the large valve needle portion (210) further comprises a small sealing gasket (260) disposed inside the valve needle body (240), the small valve port (211) comprises a through hole in the small sealing gasket (260), an inner wall of the through hole is in sealing engagement with a tapered section (224) of the small valve needle (220), and an end of the through hole facing the first inner sealing ring (231) is provided with a chamfered surface.

7. The electronic expansion valve according to claim 4, wherein the small valve needle (220) further has a limiting section (221), the limiting section (221) is located on a side of the guide hole (213) away from the small valve port (211) and is connected to the sealing section (222), and a part of the valve chamber in which the limiting section (221) is located is in communication with the small valve port (211).

8. The electronic expansion valve according to claim 4, wherein the valve seat portion (100) has a large valve port (101), and the valve needle body (240) is configured to close the large valve port (101); the valve needle body (240) is provided with a balance passage, and a part of the valve chamber in which an end of the valve needle body (240) away from the large valve port (101) is located is in communication with the large valve port (101) via the balance passage; the part of the valve chamber in which the end of the small valve needle (220) away from the sealing portion (105) is located is in communication with the small valve port (211) via the balance passage; and the large valve port (101) is in communication with the small valve port (211).

9. The electronic expansion valve according to claim 1, wherein the large valve needle portion (210) further comprises a limiting ring (250), the limiting ring (250) is fixed within the valve needle body (240), the small valve needle (220) is inserted into the valve needle body (240), and the limiting ring (250) is in a stop fit with the small valve needle (220) to prevent the small valve needle (220) from separating from the large valve needle portion (210).

10. The electronic expansion valve according to claim 9, wherein the valve needle body (240) further has a limiting hole (241), an inner diameter of the guide hole (213) is smaller than an inner diameter of the limiting hole (241), the limiting ring (250) is fixed within the limiting hole (241), and the end of the small valve needle (220) away from the sealing portion (105) is located within the limiting hole (241).

11. The electronic expansion valve according to claim 1, wherein the valve seat portion (100) has a large valve port (101), an annular assembly groove and a large sealing gasket (110); the annular assembly groove surrounds the large valve port (101) and accommodates the large sealing gasket (110); the large valve port (101) is closed when an end portion of the large valve needle portion (210) abuts against the large sealing gasket (110); wherein a surface of the large sealing gasket (110) that mates with the large valve needle portion (210) is a sealing surface (111), the sealing surface (111) is disposed at an opening of the annular assembly groove, and a chamber volume of the annular assembly groove is greater than a volume of the large sealing gasket (110) located in the annular assembly groove.

12. The electronic expansion valve according to claim 11, wherein at least one annular surface of the large sealing gasket (110) located within the annular assembly groove is in an interference fit with an inner wall of the annular assembly groove.

13. The electronic expansion valve according to claim 11, wherein a gap between an outer wall of the large sealing gasket (110) located within the annular assembly groove and an inner wall of the annular assembly groove forms at least one buffer chamber.

14. The electronic expansion valve according to claim 11, wherein the valve seat portion (100) comprises a large valve seat (120) and a small valve seat (130), the valve needle component (200) is movably disposed in the large valve seat (120), the small valve seat (130) is connected to the large valve seat (120), the small valve seat (130) has the large valve port (101), and the annular assembly groove is provided between the small valve seat (130) and the large valve seat (120).

15. The electronic expansion valve according to claim 14, wherein the small valve seat (130) has a first annular step (131), an annular sidewall of the first annular step (131) is in a limiting fit with an inner circumferential surface of the large sealing gasket (110), and a bottom wall of the first annular step (131) is in a limiting fit with a surface of the large sealing gasket (110) away from the large valve needle portion (210).

16. The electronic expansion valve according to claim 14, wherein an annular inner wall of the large valve seat (120) is provided with a compression ring (121), and the compression ring (121) is in a limiting fit with a side of the large sealing gasket (110) facing the large valve needle portion (210).

17. The electronic expansion valve according to claim 16, wherein the large sealing gasket (110) has a second annular step (112), the second annular step (112) being disposed around the sealing surface (111), an end surface of the compression ring (121) is in a limiting fit with a bottom wall of the second annular step (112), and an inner circumferential surface of the compression ring (121) is in a limiting fit with an annular sidewall of the second annular step (112).

18. The electronic expansion valve according to claim 17, wherein an end of the inner circumferential surface of the compression ring (121) facing the bottom wall of the second annular step (112) is provided with a first chamfer (1211), and a first gap is formed between the first chamfer (1211) and the large sealing gasket (110); an end of an inner circumferential surface of the large sealing gasket (110) away from the large valve needle portion (210) is provided with a second chamfer (114) , and a second gap is formed between the second chamfer (114) and the large sealing gasket (110); an end of an outer circumferential surface of the large sealing gasket (110) facing the large valve needle portion (210) is provided with a third chamfer (115) , and a third gap is formed between the third chamfer (115) and the large sealing gasket (110); and the first gap, the second gap and the third gap each function as buffer chambers.

19. The electronic expansion valve according to claim 11, wherein the valve seat portion (100) is further provided with a reinforced sealing ring (140), the large sealing gasket (110) is disposed around the large valve port (101), and the reinforced sealing ring (140) is disposed between the large sealing gasket (110) and an inner wall of the annular assembly groove.

20. The electronic expansion valve according to claim 19, wherein
the valve seat portion (100) comprises a large valve seat (120) and a small valve seat (130), the valve needle component (200) is movably disposed in the large valve seat (120), the small valve seat (130) is connected to the large valve seat (120), the small valve seat (130) has the large valve port (101), and the annular assembly groove is provided between the small valve seat (130) and the large valve seat (120);
a side of the large sealing gasket (110) away from the large valve needle portion (210) has a third annular step (113), the reinforcement sealing ring (140) is mounted in the third annular step (113), and the reinforced sealing ring (140) abuts against the large valve seat (120) and/or the small valve seat (130).

21. The electronic expansion valve according to claim 1, wherein the valve seat portion (100) has a large valve port (101); the large valve needle portion (210) further comprises a small sealing gasket (260) and a limiting sleeve (270); the small sealing gasket (260) and the limiting sleeve (270) are both located inside the valve needle body (240); at least a portion of the small sealing gasket (260) is located between the valve needle body (240) and the limiting sleeve (270); the small sealing gasket (260) has the small valve port (211); the valve needle body (240) is configured to open and close the large valve port (101); and an inner circumferential surface of the limiting sleeve (270) at an end facing the large valve port (101) has a rounded corner or a chamfer.

22. The electronic expansion valve according to claim 21, wherein the valve needle body (240) has an assembly recess (242), an opening of the assembly recess (242) faces the large valve port (101), and the small sealing gasket (260) is located in the assembly recess (242).

23. The electronic expansion valve according to claim 22, wherein at least a portion of the limiting sleeve (270) is positioned in the assembly recess (242), and an outer circumferential surface of the limiting sleeve (270) is in an interference fit with and/or is welded to an inner circumferential surface of the assembly recess (242).

24. The electronic expansion valve according to claim 23, wherein the outer circumferential surface of the limiting sleeve (270) has a chamfer at an end facing the small sealing gasket (260).

25. The electronic expansion valve according to claim 23, wherein an end of the valve needle body (240) facing the large valve port (101) is provided with an avoidance groove (243), and the assembly recess (242) is located on a bottom wall of the avoidance groove (243); the valve seat portion (100) is provided with a large sealing gasket (110) surrounding the large valve port (101), and an edge of an opening of the avoidance groove (243) is in sealing engagement with an end portion of the large sealing gasket (110).

26. The electronic expansion valve according to claim 25, wherein an end face of the limiting sleeve (270) facing the large valve port (101) is flush with the bottom wall of the avoidance groove (243), or an end face of the limiting sleeve (270) facing the large valve port (101) protrudes from the bottom wall of the avoidance groove (243).

27. The electronic expansion valve according to claim 22, wherein the small sealing gasket (260) is made of a soft material, and an outer circumferential surface of the small sealing gasket (260) has a chamfer at an end away from the large valve port (101).

28. The electronic expansion valve according to claim 21, wherein a sidewall of the valve seat portion (100) is provided with a flow-through hole (102); the large valve needle portion (210) is provided with a plurality of side ports (212) and a flow chamber (215); an end of each of the plurality of side ports (212) is in communication with the flow-through hole (102), and an other end of the each of the plurality of side ports (212) is in communication with the flow chamber (215); at least a portion of the small valve needle (220) is located within the flow chamber (215); when the small valve port (211) is open, the small valve port (211) is in communication with the flow chamber (215); an end of the each of the plurality of side ports (212) in communication with the flow chamber (215) is located at a middle portion of a sidewall of the flow chamber (215); the plurality of side ports (212) are distributed in a circumferential direction of the large valve needle portion (210), and an aperture of the each of the plurality of side ports (212) is smaller than an aperture of the flow chamber (215).

29. The electronic expansion valve according to claim 21, wherein the valve seat portion (100) has a guiding inner wall, a second inner sealing ring is provided between the large valve needle portion (210) and the guiding inner wall, and an outer wall of the large valve needle portion (210) is in movable sealing engagement with the guiding inner wall through the second inner sealing ring; an end of the large valve needle portion (210) facing the large valve port (101) serves as a sealing end, and the valve seat portion (100) is provided with a large sealing gasket (110) surrounding the large valve port (101); an annular sealing line is formed at a position where the sealing end just comes into contact with the large sealing gasket (110), and a diameter of the annular sealing line is equal to an outer diameter of the second inner sealing ring.

30. The electronic expansion valve according to claim 6, wherein the valve needle body (240) has a guide hole (213), the small valve needle (220) has a sealing section (222), the sealing section (222) axially movably passes through the guide hole (213); and the sealing section (222) has the tapered section (224), and a diameter of a small end of the tapered section (224) is smaller than a diameter of a constant-diameter section of the sealing section (222).
